# EUROPEAN PATENT APPLICATION

(11) **EP 3 467 344 A1**
(43) Date of publication of application: **10.04.2019**
(21) Application number: 18187062.7
(22) Date of filing: 02.08.2018
(51) Int. Cl.: F16H 1/32

(54) **SPEED REDUCER-ATTACHED MOTOR**

(30) Priority: 22.08.2017 JP 2017159388
(71) Applicant: MITSUBA Corporation, Kiryu-shi Gunma 376-8555 (JP)
(72) Inventor: KOBAYASHI, Motoaki, Gunma, Gunma 376-8555 (JP)
(74) Representative: Cabinet Laurent & Charras

(57) **Abstract**

A speed reducer-attached motor includes a speed reduction mechanism (3). The speed reduction mechanism (3) includes: a gear casing (10); a first eccentric part (25) of which a center (O1) is at an eccentric position with respect to a rotation axis line (LI); a second eccentric part (26) of which a center (O2) is at a position that is displaced by 180° around the rotation axis line (L1) from the center of the first eccentric part (25); a first swing gear (13) that is fitted rotatably to the first eccentric part (25) and that has a first external tooth (33a) and a first internal tooth (33b); a second swing gear (14) that is fitted rotatably to the second eccentric part (26) and that has a second external tooth (41c) and a second internal tooth (42); a fixed gear (12) that has a third internal tooth (27a) which is engaged with the first external tooth (33a) and the second external tooth (41c); and an output gear (52) that has a third external tooth (60a) which is engaged with the first internal tooth (33b) and the second internal tooth (42), that is rotated around the rotation axis line (LI), and that outputs power to an external apparatus.

## Description

### BACKGROUND

### Field of the Invention

The present invention relates to a speed reducer-attached motor.

### Background

Generally, as a speed reducer-attached motor, one such motor is known which includes a speed reduction mechanism that is operated by a hypocycloid speed reduction method (for example, refer to Japanese Unexamined Patent Application, First Publication No. 2016-93000). As this speed reduction mechanism of a hypocycloid speed reduction method, one such mechanism is known which includes an eccentric part that receives a rotation output of a motor part and is rotated, a swing gear that performs a swing movement (revolution movement) by the eccentric part and that has an internal tooth and an external tooth, a fixed gear that has a ring shape and that has an internal tooth which is engaged with an external tooth of an external tooth gear, and an output part that has an external tooth which is engaged with the internal tooth of the swing gear.

The eccentric part has an eccentric outer circumferential surface of which the center is at an eccentric position with respect to a rotation axis line of the motor part, and the swing gear is inserted rotatably at the eccentric outer circumferential surface. The output part is rotated concentrically with the rotation axis line of the motor part.

In such a configuration, when the eccentric part is rotated in accordance with the drive of the motor part, the swing gear performs a swing movement while being engaged with the fixed gear. The swing gear performs a rotation movement at a rotation number (rotation number of a rotation movement) having a more decreased speed (engagement first stage) than that of the rotation number of a revolution movement according to the engagement with the fixed gear. The rotation movement having a decreased speed of the swing gear is transmitted to the output part, and the output part is rotated at a rotation number having a more increased speed (engagement second stage) than that of the rotation number of the swing gear.

### SUMMARY

In a reducer-attached motor, there is a possibility that poor weight balance of the eccentric part or the swing gear performing a swing movement may cause a vibration or noise at the time of driving of the reducer-attached motor. Therefore, it is conceivable that a balance weight be provided in order to adjust a load balance at the time of driving (in order to balance with the eccentric mass of the eccentric part). However, for example, when thinning the diameter of the speed reduction mechanism, there is a problem in that it is difficult to ensure an arrangement space of the balance weight.

Further, an engagement reaction force between the swing gear and the fixed gear and an engagement reaction force between the swing gear and the output gear are applied on the eccentric part. Therefore, there is a possibility that the power transmission efficiency of the speed reduction mechanism may be degraded due to these reaction forces.

In view of the foregoing, an aspect of the present invention provides a high-efficiency and compact speed reducer-attached motor capable of adjusting a load balance at the time of driving without providing a balance weight.

A speed reducer-attached motor according to an aspect of the present invention includes: a motor part; and a speed reduction mechanism that reduces a speed of a rotation of the motor part and that outputs a rotation having a reduced speed, wherein the speed reduction mechanism includes: a gear casing; a first eccentric part of which a center is at an eccentric position with respect to a rotation axis line of the motor part and which is rotated in response to the rotation of the motor part; a second eccentric part of which a center is at a position that is displaced by 180° around the rotation axis line from the center of the first eccentric part and which is rotated integrally with the first eccentric part in response to the rotation of the motor part; a first swing gear that is fitted rotatably to the first eccentric part and that has a first external tooth and a first internal tooth; a second swing gear that is fitted rotatably to the second eccentric part and that has a second external tooth and a second internal tooth; a fixed gear that is fixed to the gear casing and that has a third internal tooth which is engaged with the first external tooth and the second external tooth; and an output gear that has a third external tooth which is engaged with the first internal tooth and the second internal tooth, that is rotated around the rotation axis line, and that outputs power to an external apparatus, wherein tooth numbers of the first internal tooth, the second internal tooth, and the third external tooth are set to be smaller than tooth numbers of the first external tooth, the second external tooth, and the third internal tooth.

In this way, since the first eccentric part and the second eccentric part are displaced by 180° around the rotation axis line from each other, it is possible to balance the weights of eccentric amounts mutually by the first eccentric part and the second eccentric part. Further, each of the swing gears (first swing gear, second swing gear) is rotatably fitted to each of the first eccentric part and the second eccentric part. The first swing gear and the second swing gear are moved point-symmetrically around the rotation axis line, and therefore, it is possible to balance out the engagement reaction force between the first external tooth and the third internal tooth and the engagement reaction force between the second external tooth and the third internal tooth. Further, it is possible to balance out the engagement reaction force between the first internal tooth and the third external tooth and the engagement reaction force between the second internal tooth and the third external tooth. Accordingly, it is possible to adjust a load balance at the time of driving without providing a balance weight as in the related art, and it is possible to provide a high-efficiency speed reducer-attached motor.

Further, since the tooth numbers of the first internal tooth, the second internal tooth, and the third external tooth are set to be smaller than the tooth numbers of the first external tooth, the second external tooth, and the third internal tooth, it is possible to ensure a space between teeth of the first internal tooth, the second internal tooth, and the third external tooth. By using this space, it is possible to engage the first internal tooth with the third external tooth, and it is possible to engage the second internal tooth with the third external tooth. Therefore, it is possible to downsize the speed reducer-attached motor.

In the speed reducer-attached motor described above, the first swing gear may have a first gear main body that is rotatably fitted to the first eccentric part and that has a circular plate shape, the first external tooth and the first internal tooth being provided on the first gear main body, the second swing gear may have a second gear main body that is rotatably fitted to the second eccentric part and that has a circular plate shape, the second external tooth and the second internal tooth being provided on the second gear main body, the first swing gear and the second swing gear may be arranged such that the first gear main body and the second gear main body are overlapped with each other in the rotation axis line direction, and a penetration hole through which the third external tooth of the output gear is capable of being inserted may be formed on each of the first gear main body and the second gear main body.

According to such a configuration, it is possible to arrange the first swing gear, the second swing gear, the fixed gear, and the output gear in a small space. Although the space is small, it is possible to engage the first internal tooth with the third external tooth, and it is possible to engage the second internal tooth with the third external tooth.

In the speed reducer-attached motor described above, the tooth numbers of the first internal tooth, the second internal tooth, and the third external tooth may be set to be the same as one another.

According to such a configuration, it is possible to form the first internal tooth, the second internal tooth, and the third external tooth to be as large as possible. Therefore, it is possible to enhance strengths of the first internal tooth, the second internal tooth, and the third external tooth as much as possible.

In the speed reducer-attached motor described above, the third external tooth may have a cycloidal tooth profile.

According to such a configuration, it is possible to enhance the strength of the third external tooth. Further, since it is possible to allow the contact between the third external tooth and the first and second internal teeth to be smooth, it is possible to reduce the engagement resistance between the teeth as much as possible. As a result, it is possible to improve the transmission efficiency of the speed reduction mechanism.

According to an aspect of the present invention, since the first eccentric part and the second eccentric part are displaced by 180° around the rotation axis line from each other, it is possible to balance the weights of eccentric amounts mutually by the first eccentric part and the second eccentric part. Further, each of the swing gears (first swing gear, second swing gear) is rotatably fitted to each of the first eccentric part and the second eccentric part. The first swing gear and the second swing gear are moved point-symmetrically around the rotation axis line, and therefore, it is possible to balance out the engagement reaction force between the first external tooth and the third internal tooth and the engagement reaction force between the second external tooth and the third internal tooth. Further, it is possible to balance out the engagement reaction force between the first internal tooth and the third external tooth and the engagement reaction force between the second internal tooth and the third external tooth. Accordingly, it is possible to adjust a load balance at the time of driving without providing a balance weight as in the related art, and it is possible to provide a high-efficiency speed reducer-attached motor.

Further, since the tooth numbers of the first internal tooth, the second internal tooth, and the third external tooth are set to be smaller than the tooth numbers of the first external tooth, the second external tooth, and the third internal tooth, it is possible to ensure a space between teeth of the first internal tooth, the second internal tooth, and the third external tooth. By using this space, it is possible to engage the first internal tooth and the third external tooth with each other, and it is possible to engage the second internal tooth and the third external tooth with each other. Therefore, it is possible to downsize the speed reducer-attached motor.

### BRIEF DESCRIPTION OF THE DRAWINGS

FIG. 1 is a perspective view of a speed reducer-attached motor in an embodiment of the present invention.
FIG. 2 is a cross-sectional view along an axial direction of a speed reduction mechanism in the embodiment of the present invention.
FIG. 3 is an exploded perspective view of the speed reduction mechanism in the embodiment of the present invention.
FIG. 4 is a partially enlarged plan view seen from an axial direction of a first swing gear in the embodiment of the present invention.
FIG. 5 is a perspective view of a second swing gear in the embodiment of the present invention.
FIG. 6 is a plan view seen from an axial direction of the speed reduction mechanism in the embodiment of the present invention and shows a state in which a cover and an output part are removed.
FIG. 7 is a perspective view of the output part in the embodiment of the present invention.
FIG. 8 is a plan view seen from an axial direction showing an engagement state between the first swing gear and the output part in the embodiment of the present invention.
FIG. 9 is a plan view seen from an axial direction showing an engagement state between the second swing gear and the output part in the embodiment of the present invention.

### BRIEF DESCRIPTION OF THE REFERENCE NUMERALS

1: speed reducer-attached motor
2: motor part
3: speed reduction mechanism
10: gear casing
12: ring gear (fixed gear)
13: first swing gear
14: second swing gear
15: output part
25: first eccentric part
26: second eccentric part
27a: internal tooth (third internal tooth)
32: penetration hole
33a: external tooth (first external tooth)
33b: internal tooth (first internal tooth)
41c: external tooth (second external tooth)
42: penetration hole (second internal tooth)
42a: tooth shape arcing part (second internal tooth)
52: output gear
60a: external tooth (third external tooth)
62: protrusion part
62a: tooth shape arcing surface (third external tooth)
L1: motor shaft line (rotation axis line)
O1, O2: center

### DESCRIPTION OF THE EMBODIMENTS

Next, an embodiment of the present invention is described with reference to the drawings.

### (Speed reducer-attached motor)

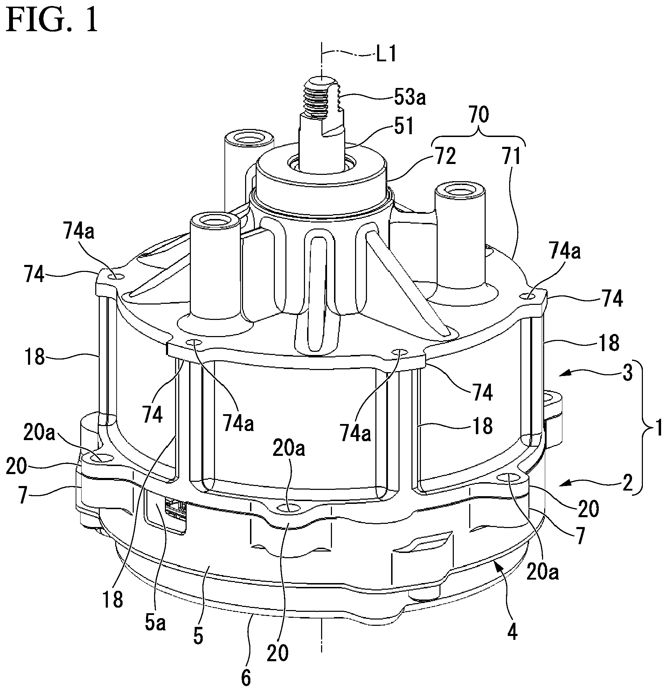

FIG. 1 is a perspective view of a speed reducer-attached motor 1.

As shown in FIG. 1, the speed reducer-attached motor 1 includes a motor part 2 having an oblate shape and a speed reduction mechanism 3 to which a rotation output of the motor part 2 is transmitted. A motor shaft line (rotation axis line) L1 which is a rotation center of the motor part 2 is matched with a rotation center (axis line) of an output shaft 51 of an output part 15 described later that constitutes the speed reduction mechanism 3.

In the following description, for ease of explanation, a side from which an output is taken out from the output shaft 51 is referred to as an upper side (upper side in FIG. 1), and the other side is referred to as a lower side (lower side in FIG. 1). That is, the motor part 2 is arranged on the lower side, and the speed reduction mechanism 3 is arranged on the upper side. A direction along the motor shaft line L1 is simply referred to as an axial direction. A direction around the motor shaft line L1 is simply referred to as a circumferential direction. A direction orthogonal to the motor shaft line L1 is referred to as a radial direction.

The motor part 2 is constituted of a so-called DC brushless motor. The motor part 2 has a motor casing 4 having a substantially cylinder shape. A cover 6 is provided on a lower end of the motor casing 4 so as to close an opening of the motor casing 4.

A plurality of bolt seats 7 are formed on a substantially upper half of an outer circumferential surface of the motor casing 4 such that the plurality of bolt seats 7 protrude toward a radially outward direction. Each bolt seat 7 is used for fastening and fixing the motor casing 4 and a gear casing 10 described later to each other by a bolt (not shown). A female screw part (not shown) is engraved on each bolt seat 7. The bolt seats 7 are arranged at a substantially equal interval in a circumferential direction.

A stator (not shown) is fixed to an inner circumferential surface of the motor casing 4. A rotor (not shown) is provided rotatably with respect to the stator on an inner side in the radial direction of the stator. A coil (not shown) is wound around the stator. The coil is formed to be electrically connectable to an external electric source (not shown) via an electric source window 5a that is formed as an opening on a circumferential wall 5 of the motor casing 4. When the external electric source (not shown) is electrically connected to the stator, a predetermined magnetic field is formed on the stator. The rotor is rotated by the magnetic field, and the rotation is further transmitted to the speed reduction mechanism 3.

### (Speed reduction mechanism)

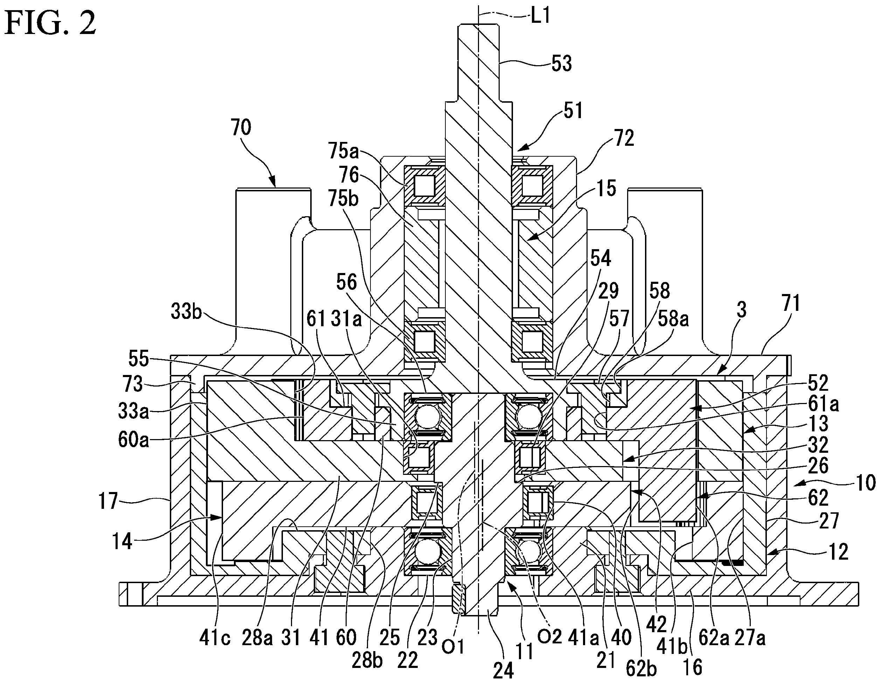

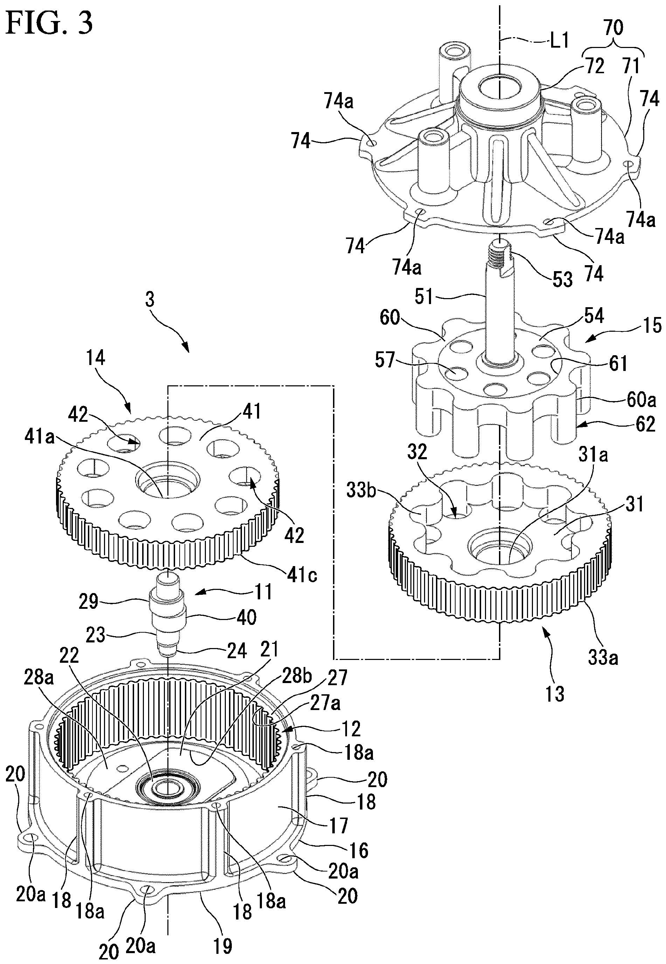

FIG. 2 is a cross-sectional view along an axial direction of the speed reduction mechanism 3. FIG. 3 is an exploded perspective view of the speed reduction mechanism 3.

As shown in FIG. 2 and FIG. 3, the speed reduction mechanism 3 is formed as a so-called hypocycloid speed reduction mechanism. The speed reduction mechanism 3 includes the gear casing 10 that is arranged on the motor casing 4, an eccentric shaft 11 that is rotatably supported by the gear casing 10, a ring gear 12 (fixed gear) that is fixed inside the gear casing 10, a first swing gear 13 and a second swing gear 14 that are engaged with the ring gear 12, and the output part 15 that is engaged with the first swing gear 13.

The gear casing 10 is formed in a substantially tube shape having a bottom. The gear casing 10 is arranged such that a bottom wall 16 of the gear casing 10 is directed to the motor part 2 side (lower side). That is, the bottom wall 16 of the gear casing 10 has a role of closing an opening at an upper end of the motor casing 4 and partitioning the motor part 2 and the speed reduction mechanism 3. The outer diameter of the outer circumferential surface of a circumferential wall 17 in the gear casing 10 is set to be slightly smaller than the outer diameter of the outer circumferential surface in the motor casing 4. A plurality of bolt seats 18 that extend in the axial direction are integrally molded on the outer circumferential surface of the circumferential wall 17. The bolt seats 18 are used for fastening and fixing a cover 70 described later to the gear casing 10 by a bolt (not shown). The bolt seats 18 are formed throughout the entire region in the axial direction of the circumferential wall 17 and are arranged at an equal interval in the circumferential direction. A female screw part 18a is engraved along the axial direction on each bolt seat 18.

An outer flange part 19 is formed on an end portion on the motor casing 4 side of the circumferential wall 17. The outer diameter of the outer flange part 19 is set to be substantially the same as the outer diameter of the outer circumferential surface in the motor casing 4. A bolt seat 20 is formed on the outer flange part 19 at each of positions that correspond to the bolt seats 7 of the motor casing 4 such that the bolt seat 20 protrudes toward a radially outward direction. The bolt seats 7 and 20 are overlapped with each other in the axial direction. A bolt insertion hole 20a is formed on each bolt seat 20 of the gear casing 10. A bolt (not shown) is threaded into the female screw part (not shown) that is engraved on the bolt seat 7 of the motor casing 4 via the bolt insertion hole 20a. Thereby, the motor casing 4 and the gear casing 10 are fastened and fixed to each other.

A bearing housing 21 is integrally molded on the center in the radial direction of the bottom wall 16 of the gear casing 10. The bearing housing 21 is formed in a substantially oval shape when seen from the axial direction. A bearing 22 is provided on the bearing housing 21 at the center in the radial direction of the bottom wall 16. The bearing 22 rotatably supports a lower part of the eccentric shaft 11 described later.

The ring gear 12 is internally fitted and fixed to an inner circumferential surface of the circumferential wall 17 of the gear casing 10. The ring gear 12 is formed in a substantially tube shape having a bottom so as to correspond to the inner surface of the gear casing 10. That is, the ring gear 12 is formed so as to almost cover the inner surface of the circumferential wall 17 and the inner surface of the bottom wall 16 in the gear casing 10. An internal tooth 27a (third internal tooth) is formed on the entire inner circumferential surface of a circumferential wall 27 of the ring gear 12.

A fit protrusion part 28a is formed entirely on a bottom wall 28 of the ring gear 12 via a predetermined gap from the internal tooth 27a such that the fit protrusion part 28a protrudes upward. In other words, the fit protrusion part 28a is formed on most of the center part in the radial direction of the bottom wall 28 of the ring gear 12 such that the fit protrusion part 28a protrudes upward. The fit protrusion part 28a is formed in a substantially circular shape when seen from the axial direction. The fit protrusion part 28a is used for regulating the displacement in the radial direction of the second swing gear 14 (details are described later).

A fit hole 28a that has a substantially oval shape and that is capable of fitting to the bearing housing 21 of the gear casing 10 is formed on the bottom wall 28 of the ring gear 12. The fit hole 28a of the ring gear 12 is fitted to the bearing housing 21 of the gear casing 10, and thereby, it is regulated that the ring gear 12 is rotated around the motor shaft line L1.

The eccentric shaft 11 that is supported by the bearing 22 of the gear casing 10 has a shaft main body 23 that is concentric with the motor shaft line L1. A lower end of the shaft main body 23 is rotatably supported by the bearing 22. A connection shaft 24 that protrudes toward the motor part 2 side is integrally molded on the lower end of the shaft main body 23 via the bearing 22. The connection shaft 24 is connected to the rotor (not shown) of the motor part 2 via a joint (not shown). Thereby, the rotation of the rotor is transmitted to the eccentric shaft 11.

Two eccentric parts 25, 26, namely a first eccentric part 25 and a second eccentric part 26, are integrally molded on the center in the axial direction of the shaft main body 23. Each of the two eccentric parts 25, 26 is formed in a cylinder shape. The first eccentric part 25 is arranged on an upper side. The second eccentric part 26 is arranged on a lower side. An outer circumferential surface 25a of the first eccentric part 25 is formed of a cylindrical surface having a center 01 at an eccentric position with respect to the motor shaft line L1. An outer circumferential surface 26a of the second eccentric part 26 is formed of a cylindrical surface having a center O2 at an eccentric position with respect to the motor shaft line L1. An eccentric amount of the center 01 of the first eccentric part 25 is set to be the same as an eccentric amount of the center O2 of the second eccentric part 26. The first eccentric part 25 and the second eccentric part 26 are arranged such that the centers 01, O2 are displaced by 180° around the motor shaft line L1 from each other. That is, the center 01 of the first eccentric part 25 and the center O2 of the second eccentric part 26 are at point-symmetric positions around the motor shaft line L1.

The first swing gear 13 is rotatably supported by the first eccentric part 25 via a bearing 29. The first swing gear 13 has a first gear main body 31 having a substantially circular plate shape. The first swing gear 13 is arranged on an inner side in the radial direction of the circumferential wall 27 of the ring gear 12. A bearing accommodation hole 31a to which an outer circumferential surface of the bearing 29 is fitted is formed on the center in the radial direction of the first gear main body 31.

An external internal tooth ring 33 is provided on an outer circumferential part of the first gear main body 31 to stand toward an upward direction.

An external tooth 33a (first external tooth) that is engaged with the internal tooth 27a of the ring gear 12 is formed on an outer circumferential surface of the external internal tooth ring 33. An internal tooth 33b (first internal tooth) is formed on an inner circumferential surface of the external internal tooth ring 33.

The tooth number of the internal tooth 33b is set to be smaller than the tooth number of the external tooth 33a and the tooth number of the internal tooth 27a of the ring gear 12. Specifically, for example, the tooth number of the internal tooth 27a of the ring gear 12 is set to 43, and the tooth number of the external tooth 33a of the first swing gear 13 is set to 42. On the other hand, the tooth number of the internal tooth 33b of the first swing gear 13 is set to 9. Therefore, the circle pitch of the internal tooth 33b is greater than that of the external tooth 33a.

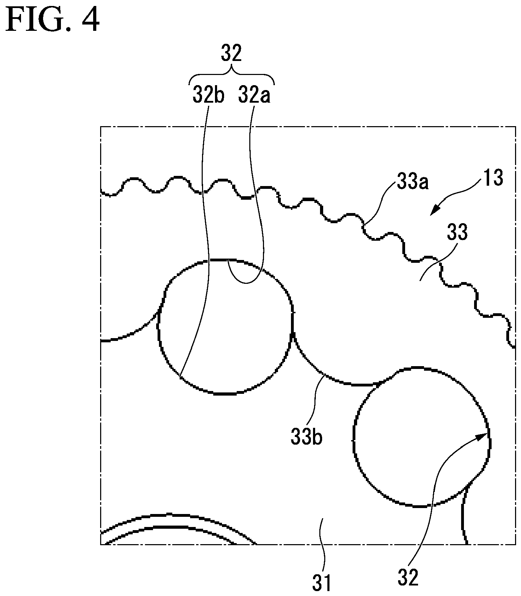

FIG. 4 is a partially enlarged plan view seen from an axial direction of the first swing gear 13.

As shown in FIG. 4, a penetration hole 32 that penetrates in a thickness direction is formed between teeth of the internal tooth 33b on the first gear main body 31 of the first swing gear 13. About half of an inner circumferential edge of the penetration hole 32 is a tooth shape arcing part 32a that is formed along the shape of the tooth bottom between teeth of the internal tooth 33b. About the other half of the inner circumferential edge of the penetration hole 32 is an arc part 32b that continues smoothly to the tooth shape arcing part 32a. The tooth shape arcing part 32a has a cycloidal tooth profile.

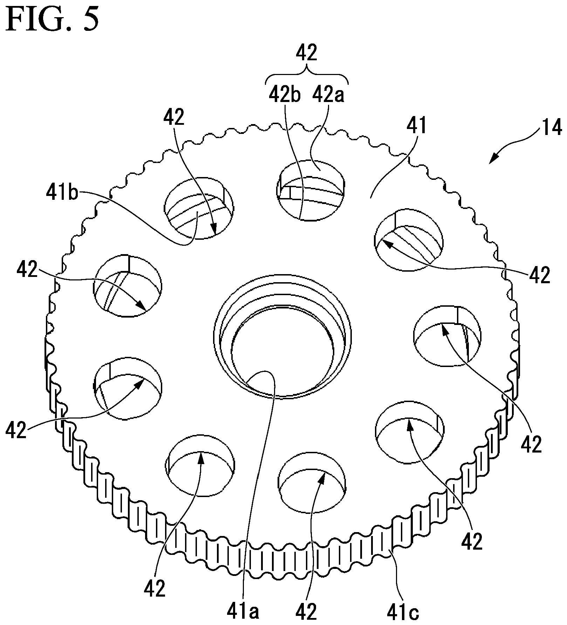

FIG. 5 is a perspective view of the second swing gear 14.

As shown in FIG. 2, FIG. 3, and FIG. 5, the second swing gear 14 is rotatably supported by the second eccentric part 26 of the eccentric shaft 11 via a bearing 40. The second swing gear 14 has a second gear main body 41 having a substantially circular plate shape. The second swing gear 14 is arranged on an inner side in the radial direction of the circumferential wall 27 of the ring gear 12 and on a lower surface side of the first gear main body 31. A bearing accommodation hole 41a to which an outer circumferential surface of the bearing 40 is fitted is formed on the center in the radial direction of the second gear main body 41.

A fit recess part 41b is formed on most of the center part in the radial direction of a lower surface of the second gear main body 41. The fit recess part 41b is loosely fitted to the fit protrusion part 28a that is formed on the bottom wall 28 of the ring gear 12. Thereby, a displacement in the radial direction of the second swing gear 14 is regulated.

An external tooth 41c (second external tooth) that is engaged with the internal tooth 27a of the ring gear 12 is formed on an outer circumferential part of the second gear main body 41. The tooth number of the external tooth 41c is set to be the same as the tooth number of the external tooth 33a of the first swing gear 13.

A penetration hole 42 (second internal tooth) is formed on the second gear main body 41 at a position that corresponds to the penetration hole 32 of the first swing gear 13 and at a position from an upper surface of the second gear main body 41 to the fit recess part 41b. The penetration hole 42 is formed in the same shape as that of the penetration hole 32 of the first swing gear 13. That is, half on an outer side in the radial direction of an inner circumferential edge of the penetration hole 42 is a tooth shape arcing part 42a (second internal tooth), and the other half on an inner side in the radial direction of the inner circumferential edge of the penetration hole 42 is an arc part 42b that continues smoothly to the tooth shape arcing part 42a. The tooth shape arcing part 42a has a cycloidal tooth profile.

As shown in FIG. 5 in detail, an outermost position at which the penetration hole 42 is formed is arranged at a slightly more outside position in the radial direction than the fit recess part 41b. Therefore, when seeing the second swing gear 14 from an upper side (the first swing gear 13 side), the circumferential edge of the fit recess part 41b becomes a state of being partially exposed via the penetration hole 42.

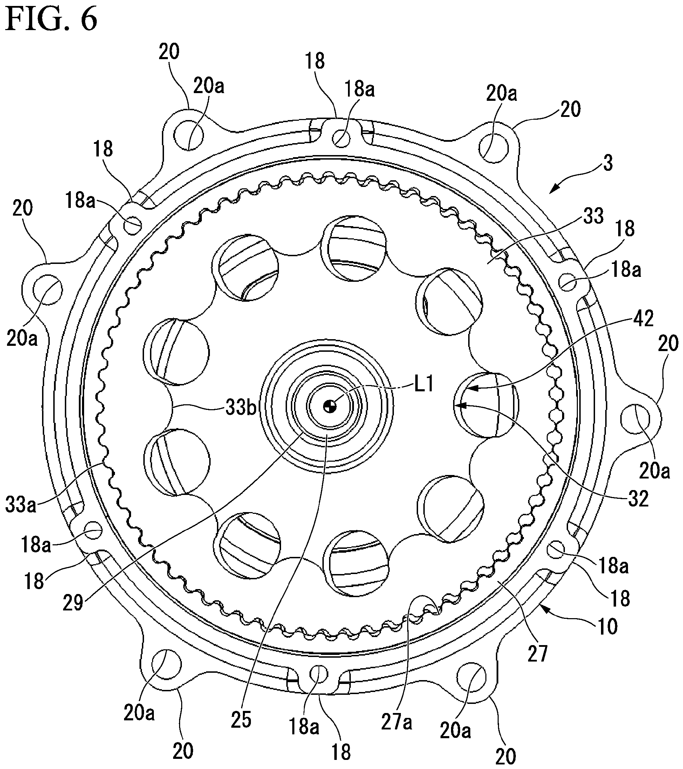

FIG. 6 is a plan view seen from an axial direction of a state in which the eccentric shaft 11, the ring gear 12, the first swing gear 13, and the second swing gear 14 are stored inside the gear casing 10.

As described above, the first swing gear 13 is rotatably supported by the first eccentric part 25 of the eccentric shaft 11 via the bearing 29, and the second swing gear 14 is rotatably supported by the second eccentric part 26 via the bearing 40. Therefore, as shown in FIG. 6, the penetration hole 32 of the first swing gear 13 and the penetration hole 42 of the second swing gear 14 are formed at a position that corresponds to each other, but the positions of the penetration holes 32, 42 are not matched with each other when seen from the axial direction. That is, the penetration hole 32 of the first swing gear 13 and the penetration hole 42 of the second swing gear 14 are displaced by 180° around the motor shaft line L1.

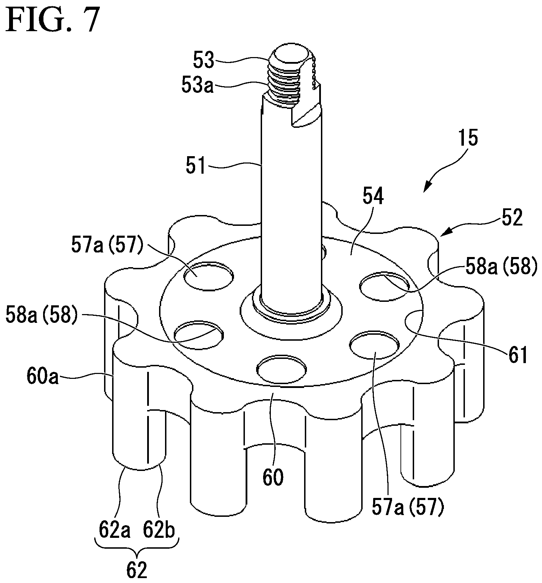

FIG. 7 is a perspective view of the output part 15.

As shown in FIG. 2, FIG. 3, and FIG. 7, the output part 15 is arranged on the first swing gear 13 and on an inner side in the radial direction of the external internal tooth ring 33 of the first swing gear 13.

The output part 15 is formed of the output shaft 51 that is formed in a substantially cylinder shape which is concentric with the motor shaft line L1 and an output gear 52 that is provided on a lower end of the output shaft 51. The output gear 52 is arranged on the first swing gear 13 and the inner side in the radial direction of the external internal tooth ring 33 of the first swing gear 13.

A connection shaft 53 to which a two-direction removal processing is applied is integrally molded on a front end of the output shaft 51 concentrically with the output shaft 51. A female screw part 53a is engraved on the connection shaft 53. The connection shaft 53 is used for outputting an output of the speed reducer-attached motor 1 to an external apparatus (now shown) by being connected to the external apparatus (not shown).

A flange part 54 having a substantially circular plate shape is integrally molded on a lower end of the output shaft 51. A bearing housing 55 is formed on a lower surface of the flange part 54 such that the bearing housing 55 protrudes downward. A bearing 56 is internally fitted and fixed to the bearing housing 55. An upper end part of the eccentric shaft 11 is rotatably supported by the bearing 56.

A bolt insertion hole 58 through which a bolt 57 is capable of being inserted is formed on an outer circumferential portion of the flange part 54. A counter boring portion 58a that receives a head part 57a of the bolt 57 is formed on an upper surface of the bolt insertion hole 58. By forming the counter boring portion 58a, when the bolt 57 is inserted in the bolt insertion hole 58, it is possible to prevent the head part 57a of the bolt 57 from protruding from the flange part 54. The bolt 57 that is inserted in the bolt insertion hole 58 fastens and fixes the output shaft 51 and the output gear 52 to each other.

The output gear 52 has a gear main body 60 having a substantially circular plate shape. A storage recess part 61 is formed on most of the center part in the radial direction of an upper surface of the gear main body 60. The diameter of the storage recess part 61 is set to be slightly larger than the diameter of the flange part 54. The flange part 54 of the output shaft 51 is stored in such a storage recess part 61. A female screw part 61a is engraved on the storage recess part 61 at a position that corresponds to the bolt insertion hole 58 of the flange part 54. A bolt 57 that is inserted into the bolt insertion hole 58 is threaded into the female screw part 61a. Thereby, the output shaft 51 and the output gear 52 are fastened and fixed to each other.

An external tooth 60a (third external tooth) that is concentric with the motor shaft line L1 is formed on an outer circumferential part of the gear main body 60. The external tooth 60a has a cycloidal tooth profile. The external tooth 60a is engaged with the internal tooth 33b of the first swing gear 13.

The external tooth 60a has a protrusion part 62 that is formed to protrude along the axial direction and toward a downward direction. The protrusion part 62 is inserted in the penetration hole 32 of the first swing gear 13 and is further inserted in the penetration hole 42 of the second swing gear 14. A surface that continues to the external tooth 60a of the protrusion part 62 is a tooth shape arcing surface 62a (third external tooth) having a cycloidal tooth profile similarly to the external tooth 60a. A surface on an inner side in the radial direction other than the tooth shape arcing surface 62a of the protrusion part 62 is an arc surface 62b that smoothly continues to the tooth shape arcing surface 62a. Thereby, the protrusion part 62 is inserted in the penetration hole 42 of the second swing gear 14 and is engaged with the penetration hole 42.

As shown in FIG. 1 and FIG. 2, the cover 70 is attached to an upper end of the gear casing 10 in a state where the eccentric shaft 11, the ring gear 12, the first swing gear 13, the second swing gear 14, and the flange part 54 of the output part 15 are stored inside the gear casing 10.

The cover 70 is formed of a cover main body 71 that is formed in a substantially circular plate shape so as to close an opening of the circumferential wall 17 of the gear casing 10 and a bearing housing 72 that is formed to protrude upward from the cover main body 71.

A spigot-and-socket fit part 73 that has an annular shape and that is fitted by spigot-and-socket fitting to the circumferential wall 17 of the gear casing 10 is formed to protrude on a lower surface of the cover main body 71. Positioning in the radial direction of the cover 70 with respect to the gear casing 10 is performed by the spigot-and-socket fit part 73. A front end of the spigot-and-socket fit part 73 is in contact with an upper end of the circumferential wall 27 of the ring gear 12.

A bolt seat 74 is formed on an outer circumferential edge of the cover main body 71 at each of positions that correspond to the bolt seats 18 of the gear casing 10 such that the bolt seat 74 protrudes outward in the radial direction. A bolt insertion hole 74a that communicates with the female screw part 18a (refer to FIG. 3) of the gear casing 10 is formed on each bolt seat 74. A bolt (not shown) is threaded into the female screw part 18a of the gear casing 10 via the bolt insertion hole 74a. Thereby, the gear casing 10 and the cover 70 are fastened and fixed to each other.

The bearing housing 72 is formed in a substantially cylinder shape and is arranged concentrically with the motor shaft line L1. An upper end of the output shaft 51 protrudes upward in the axial direction of the cover 70 via the bearing housing 72.

Each of bearings 75a, 75b is provided on each of ends in the vertical direction of the bearing housing 72. The output shaft 51 is rotatably supported by the bearings 75a, 75b. A collar 76 is provided between the two bearings 75a, 75b inside the bearing housing 72.

The collar 76 performs positioning in the axial direction of the two bearings 75a, 75b.

### (Operation of speed reducer-attached motor)

Next, an operation of the speed reducer-attached motor 1 is described.

The rotor (not shown) of the motor part 2 is rotated, and thereby, the eccentric shaft 11 that is connected to the rotor is rotated. When the eccentric shaft 11 is rotated, the first swing gear 13 and the second swing gear 14 are rotated in response to the rotation. The first swing gear 13 is supported rotatably via the bearing 29 by the first eccentric part 25 of the eccentric shaft 11. The second swing gear 14 is supported rotatably via the bearing 40 by the second eccentric part 26 of the eccentric shaft 11. Therefore, each of the swing gears 13, 14 revolves around the motor shaft line L1 and is rotated such that the speed is reduced with respect to the eccentric shaft 11 around each of the corresponding centers 01, O2 (refer to FIG. 2) of the eccentric parts 25, 26 (engagement first stage).

The first swing gear 13 of the two swing gears 13, 14 is engaged with the output gear 52. Therefore, by the swinging rotation of the first swing gear 13, power is transmitted to the first swing gear 13 (engagement second stage), and the output part 15 is rotated. Thereby, the drive force of the speed reducer-attached motor 1 is output.

The first eccentric part 25 and the second eccentric part 26 are arranged such that the centers 01, O2 are displaced by 180° around the motor shaft line L1 from each other. In other words, the center 01 of the first eccentric part 25 and the center O2 of the second eccentric part 26 are at point-symmetric positions around the motor shaft line L1. That is, the penetration hole 32 of the first swing gear 13 and the penetration hole 42 of the second swing gear 14 are displaced by 180° around the motor shaft line L1. Therefore, the first swing gear 13 and the second swing gear 14 perform a swing movement while being displaced by 180° around the motor shaft line L1. As a result, a timing when the internal tooth 33b of the first swing gear 13 is engaged with the external tooth 60a of the output part 15 and a timing when the penetration hole 42 of the second swing gear 14 is engaged with the protrusion part 62 of the output part 15 are displaced by 180° around the motor shaft line L1 from each other.

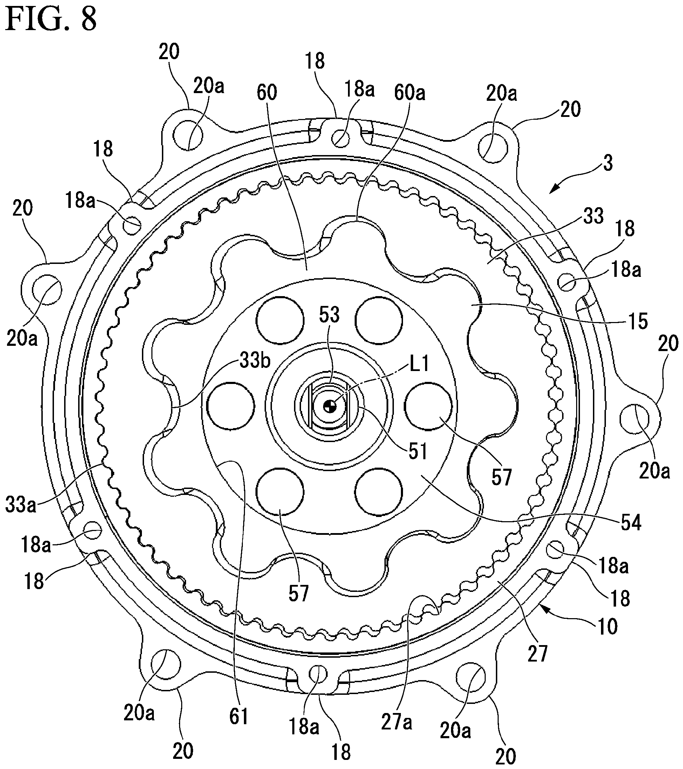

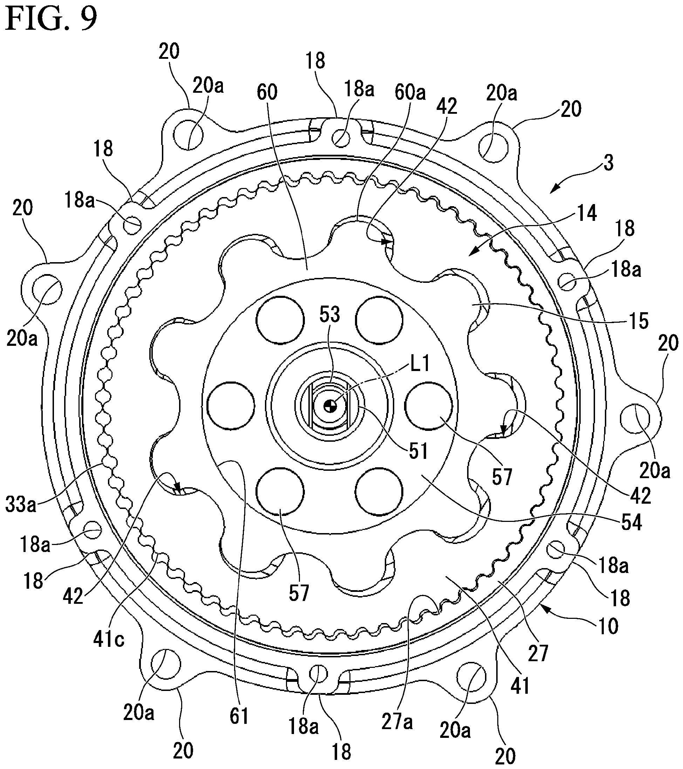

That is, as shown in FIG. 8, when a position at which the internal tooth 33b of the first swing gear 13 is engaged with the external tooth 60a of the output part 15 is approximately on the right side in FIG. 8, as shown in FIG. 9, a position at which the penetration hole 42 of the second swing gear 14 is engaged with the protrusion part 62 of the output part 15 becomes a position (approximately on the left side in FIG. 9) displaced by 180° around the motor shaft line L1. It is assumed that both of FIG. 8 and FIG. 9 are seen from the same direction in the axial direction.

In this way, the embodiment described above includes the eccentric shaft 11 having the first eccentric part 25 and the second eccentric part 26 that are displaced by 180° around the motor shaft line L1 from each other. Each of the swing gears 13, 14 is provided on each of the eccentric parts 25, 26. Therefore, it is possible to balance the weights of eccentric amounts mutually by the first eccentric part 25 and the second eccentric part 26. Further, the first swing gear 13 and the second swing gear 14 are moved point-symmetrically around the motor shaft line L1, and therefore, it is possible to balance out the engagement reaction force between the internal tooth 33b of the first swing gear 13 and the external tooth 60a of the output part 15 and the engagement reaction force between the penetration hole 42 of the second swing gear 14 and the protrusion part 62 of the output part 15. Further, it is possible to balance out the engagement reaction force between the internal tooth 27a of the ring gear 12 and the external tooth 33a of the first swing gear 13 and the engagement reaction force between the internal tooth 27a of the ring gear 12 and the external tooth 41c of the second swing gear 14. Accordingly, it is possible to adjust a load balance at the time of driving of the speed reduction mechanism 3 without providing a balance weight as in the related art, and it is possible to provide a high-efficiency speed reducer-attached motor 1.

Further, the tooth number of the internal tooth 33b of the first swing gear 13 and the number of the penetration hole 42 of the second swing gear 14 are set to be smaller than the tooth numbers of the external tooth 33a of the first swing gear 13, the external tooth 41c of the second swing gear 14, and the internal tooth 27a of the ring gear 12. Therefore, the circle pitch of the internal tooth 33b of the first swing gear 13 is greater than that of the external tooth 33a of the first swing gear 13. As a result, it is possible to ensure a space between teeth of the internal tooth 33b of the first swing gear 13. By using this space, it is possible to form the penetration hole 32 on the first swing gear 13, and it is possible to engage the protrusion part 62 of the output part 15 with the second swing gear 14 via the penetration hole 32. Therefore, it is possible to downsize the speed reduction mechanism 3 (speed reducer-attached motor 1). Further, as the tooth number of the internal tooth 33b of the first swing gear 13 is small, it is possible to form the internal tooth 33b and the external tooth 60a of the output part 15 to be large. Therefore, it is possible to enhance the strengths of the internal tooth 33b and the external tooth 60a as much as possible.

Further, by arranging the first swing gear 13 and the second swing gear 14 to be overlapped with each other in the axial direction and using the penetration holes 32, 42 of the swing gears 13, 14, the first swing gear 13 is engaged with the external tooth 60a of the output part 15, and the second swing gear 14 is engaged with the protrusion part 62 of the output part 15. In this way, by reducing an unnecessary space of each component that constitutes the speed reduction mechanism 3 as much as possible, it is possible to downsize the speed reduction mechanism 3.

Further, each of the external tooth 60a of the output gear 52 and the tooth shape arcing surface 62a of the protrusion part 62 has a cycloidal tooth profile. Therefore, it is possible to enhance the strengths of the external tooth 60a and the protrusion part 62.

Further, it is possible to allow the contact of the external tooth 60a of the output gear 52 and the protrusion part 62 with the internal tooth 33b of the first swing gear 13 and the penetration hole 42 of the second swing gear 14 to be smooth. Therefore, it is possible to reduce the engagement resistance between the external tooth 60a and the protrusion part 62, and the internal tooth 33b and the penetration hole 42 as much as possible. As a result, it is possible to improve the transmission efficiency of the speed reduction mechanism 3.

The present invention is not limited to the embodiment described above, and various changes can be added to the embodiment described above without departing from the scope of the invention.

For example, the above embodiment is described using an example in which the tooth number of the internal tooth 27a of the ring gear 12 that constitutes the engagement first stage is set to 43, and the tooth number of the external tooth 33a of the first swing gear 13 and the tooth number of the external tooth 41c of the second swing gear 14 are set to 42. The above embodiment is described using an example in which each of the tooth number of the internal tooth 33b of the first swing gear 13 that constitutes the engagement second stage, the number of the penetration hole 42 of the second swing gear 14, and the tooth number of the external tooth 60a of the output gear 52 is set to 9. However, the embodiment is not limited thereto. The tooth number of the internal tooth 33b of the first swing gear 13, the number of the penetration hole 42 of the second swing gear 14, and the tooth number of the external tooth 60a of the output gear 52 may be the same as one another and can be arbitrarily set.

Further, the above embodiment is described using an example in which the output part 15 is formed of the output shaft 51 that is formed in a substantially cylinder shape which is concentric with the motor shaft line L1 and the output gear 52 that is provided on the lower end of the output shaft 51. The above embodiment is described using an example in which the output shaft 51 and the output gear 52 are fastened and fixed to each other by the bolt 57. However, the embodiment is not limited thereto, and the output shaft 51 and the output gear 52 may be integrally molded.

## Claims

1. A speed reducer-attached motor, comprising:
a motor part; and
a speed reduction mechanism that reduces a speed of a rotation of the motor part and that outputs a rotation having a reduced speed,
wherein the speed reduction mechanism comprises:
a gear casing;
a first eccentric part of which a center is at an eccentric position with respect to a rotation axis line of the motor part and which is rotated in response to the rotation of the motor part;
a second eccentric part of which a center is at a position that is displaced by 180° around the rotation axis line from the center of the first eccentric part and which is rotated integrally with the first eccentric part in response to the rotation of the motor part;
a first swing gear that is fitted rotatably to the first eccentric part and that has a first external tooth and a first internal tooth;
a second swing gear that is fitted rotatably to the second eccentric part and that has a second external tooth and a second internal tooth;
a fixed gear that is fixed to the gear casing and that has a third internal tooth which is engaged with the first external tooth and the second external tooth; and
an output gear that has a third external tooth which is engaged with the first internal tooth and the second internal tooth, that is rotated around the rotation axis line, and that outputs power to an external apparatus,
wherein tooth numbers of the first internal tooth, the second internal tooth, and the third external tooth are set to be smaller than tooth numbers of the first external tooth, the second external tooth, and the third internal tooth.

2. The speed reducer-attached motor according to Claim 1,
wherein the first swing gear has a first gear main body that is rotatably fitted to the first eccentric part and that has a circular plate shape, the first external tooth and the first internal tooth being provided on the first gear main body,
the second swing gear has a second gear main body that is rotatably fitted to the second eccentric part and that has a circular plate shape, the second external tooth and the second internal tooth being provided on the second gear main body,
the first swing gear and the second swing gear are arranged such that the first gear main body and the second gear main body are overlapped with each other in the rotation axis line direction, and
a penetration hole through which the third external tooth of the output gear is capable of being inserted is formed on each of the first gear main body and the second gear main body.

3. The speed reducer-attached motor according to Claim 1 or 2,
wherein the tooth numbers of the first internal tooth, the second internal tooth, and the third external tooth are set to be the same as one another.

4. The speed reducer-attached motor according to any one of Claims 1 to 3,
wherein the third external tooth has a cycloidal tooth profile.
